# EUROPEAN PATENT APPLICATION

(11) **EP 4 257 287 A1**
(43) Date of publication of application: **11.10.2023**
(21) Application number: 22305458.6
(22) Date of filing: 05.04.2022
(51) Int. Cl.: B24B 13/06, B24B 13/00, B24B 13/005, B24B 51/00, G02C 7/00

(54) **COMPUTER-IMPLEMENTED METHOD AND MANUFACTURING SYSTEM FOR MANUFACTURING BY MACHINING AN OPHTALMIC DEVICE**

(71) Applicant: Essilor International, 94220 Charenton-Le-Pont (FR)
(72) Inventor: MOINE, Jerome, 94410 SAINT MAURICE (FR); BESSONNET, Stephane, 94000 CRETEIL (FR); PICAT, Victor, 94000 CRETEIL (FR); PINAULT, Sebastien, 91310 LONGPONT SUR ORGE (FR)
(74) Representative: Santarelli

(57) **Abstract**

The disclosure relates to a method for manufacturing by machining an ophthalmic device made from a substrate, carrying out a roughing (110, 120) on a face of the substrate and next a finishing (130) on said face of the substrate, the method comprising blocking (110-150) the substrate by applying on the latter a first blocking force during the roughing and a second blocking force during the finishing, the first blocking force being higher than the second blocking force.

## Description

### FIELD OF THE DISCLOSURE

The disclosure relates to a method for manufacturing by machining an ophthalmic device.

The disclosure also relates to a command and control unit including system elements configured to run a computer program in order to implement the method for manufacturing by machining an ophthalmic device, and to a manufacturing system comprising such a command and control unit and configured for carrying out such a manufacturing method.

The disclosure also relates to a computer program including instructions configured to implement the manufacturing method, when said computer program is run by a computer, and to a client-server communication interface for transferring to a remote computer at least a manufacturing data which is determined by a computer program that implements the manufacturing method, when said computer program is run in a command and control unit.

### BACKGROUND ART

European patent EP 3 060 086 relates to a method for machining a lens, comprising the steps of:
- holding a semi-finished product through a suction holding force which is active during an entire surface machining cycle of the semi-finished product, the semi-finished product comprising a front surface, a rear surface opposite to the front surface and a perimeter side surface, wherein the suction holding force acts on the front surface;
- activating a pressure holding force depending on the level of the mechanical stresses exerted on the semi-finished product during the surface machining cycle on the rear surface, the pressure holding force acting on the rear surface;
- carrying out the surface machining cycle on the rear surface which comprises a first step in which the semi-finished product is held by the application of both the suction holding force on said front surface and the pressure holding force on said rear surface, and a subsequent step in which the semi-finished product is held by application of just the suction holding force on said front surface.

In the method of EP 3 060 086, the pressure holding force is activated depending on the instantaneous position taken up by a machine tool in the surface machining cycle.

In particular, the pressure holding force is kept active when the machine tool is close to the outer edge of the rear surface and not active when the machine tool is close to a central portion of the rear surface.

According to EP 3 060 086, the method described allows the selective use of a pressure holding force in addition to a suction force, which renders possible to carry out the machining of the surface to be treated without the need for a reference block.

### SUMMARY OF THE DISCLOSURE

The disclosure is directed to a method for manufacturing by machining an ophthalmic device, which is easy and convenient to implement.

The disclosure accordingly provides, according to a first aspect, a method for manufacturing by machining an ophthalmic device made from a substrate, carrying out a roughing on a face of the substrate and next a finishing on said face of the substrate, the method comprising blocking the substrate by applying on the latter a first blocking force during the roughing and a second blocking force during the finishing, the first blocking force being higher than the second blocking force.

According to the disclosure, the blocking of the substrate can be adapted depending of the specific machining, that is to say between the roughing in which first mechanical stresses are applied to the substrate and the finishing in which second mechanical stresses are applied to the substrate, the second mechanical stresses being lower than the first mechanical stresses.

In other words, during roughing, the first blocking force allows strongly holding the substrate and resist to high cutting forces, while during finishing, the second blocking force allows less strongly holding the substrate because of lower cutting forces.

According to the disclosure, the method allows the substrate to be partially deformed due to the first blocking force applied thereon during roughing, while the method does not allow, or at least mainly prevents, the substrate to be deformed due to the second blocking force applied thereon.

By both allowing the partial deformation of the substrate during roughing and preventing and/or reducing and/or cancelling the partial deformation of the substrate during finishing, the method according to the disclosure limits the effects of the deformation phenomena generated during the machining of the ophthalmic device, and thus reduces an optical power error, for instance a power deviation, generated by such deformation phenomena, thus providing a more accurate ophthalmic device.

Advantageous and convenient features of the manufacturing method are described below.

Roughing may comprise cribbing and/or milling and/or turning of the substrate.

Finishing may comprise diamond turning of the substrate.

The method may comprise a first roughing during which the first blocking force is applied on the substrate and a second roughing between the first roughing and the finishing and during which a third blocking force is applied on the substrate, the third blocking force being higher than the second blocking force applied during the finishing.

The second roughing here generates cutting forces higher than the cutting forces generated during the finishing and thus requires more strongly holding the substrate than during the finishing.

The third blocking force may be equal or lower than the first blocking force.

The method may next comprise edging and/or polishing the substrate and blocking the substrate by applying on the latter a fourth blocking force and/or a fifth blocking force during the edging, respectively the polishing, the fourth blocking force and/or the fifth blocking force being equal, lower or higher than the first blocking force and/or the second blocking force.

The fourth blocking force and/or the fifth blocking force may be equal, lower or higher than the third blocking force, if any.

Roughing and finishing are carried out on a first face of the substrate and at least the first blocking force and the second blocking force are applied on a second face of the substrate opposite to the first face and/or on an outline portion of the substrate.

Blocking may comprise maintaining the substrate by clamping the substrate and/or by vacuum sucking the substrate.

Clamping the substrate can be carried out by applying forces on a face of the substrate which is not machined by roughing and/or finishing and/or on an outline portion of the substrate.

Vacuum sucking the substrate can be carried out by applying forces on a face of the substrate which is not machined by roughing and/or finishing.

The substrate can be a blank or a semi-finished ophthalmic lens.

The face of the substrate which is machined can define an ophthalmic surface which can be an progressive ophthalmic surface, or a toric surface or others corrective surfaces.

The disclosure also provides, according to a second aspect, a command and control unit including system elements configured to run a computer program in order to implement the method for manufacturing by machining an ophthalmic device as described above.

The disclosure further provides, according to a third aspect, a manufacturing system configured for carrying out the manufacturing method described above, and comprising a roughing tool, a finishing tool, a blocking device configured to apply to the substrate at least the first blocking force during the roughing and the second blocking force during the finishing.

The manufacturing system may comprise a command and control unit as described above.

The blocking device may comprise a clamping member which is configured to apply a variable clamping force selected amongst at least the first blocking force and the second blocking force.

The blocking device may comprise a vacuum sucking member which is configured to apply a variable vacuum sucking force selected amongst at least the first blocking force and the second blocking force.

The disclosure also provides, according to a fourth aspect, a computer program including instructions configured to implement the method for manufacturing by machining an ophthalmic device as described above, when said computer program is run by a computer.

The disclosure further provides, according to a fifth aspect, a client-server communication interface for transferring to a remote computer at least manufacturing data, such as the first blocking force and the second blocking force, which are determined by a computer program that implements at least partially the method for manufacturing by machining an ophthalmic device as described above, when said computer program is run in a command and control unit, the remote computer implementing the rest of such method for manufacturing.

### BRIEF DESCRIPTION OF THE DRAWINGS

The description of the disclosure now continues with a detailed description of advantageous embodiments given hereinafter by way of nonlimiting example and with reference to the appended drawings.
Figure 1 schematically depicts a manufacturing system such as a digital surfacing machine, configured to carry out steps of a method for manufacturing an ophthalmic device, according to the disclosure.
Figure 2 diagrammatically shows a client-server communication interface comprising system parts configured for transferring at least one configuration parameter determined by the method according to the disclosure to a remote data processing system.
Figure 3 is a block diagram illustrating operating steps of the method for manufacturing an ophthalmic device according to the disclosure and thanks to the digital surfacing machine and/or to the client-server communication interface illustrated in Figures 1 and 2.
Figure 4 illustrates schematically a first embodiment of a blocking device which is mounted in the machine shown in Figure 1.
Figure 5 illustrates schematically a second embodiment of the blocking device.

### DETAILED DESCRIPTION OF EXAMPLE EMBODIMENTS

The disclosure is directed to a method for manufacturing an ophthalmic device comprising machining steps.

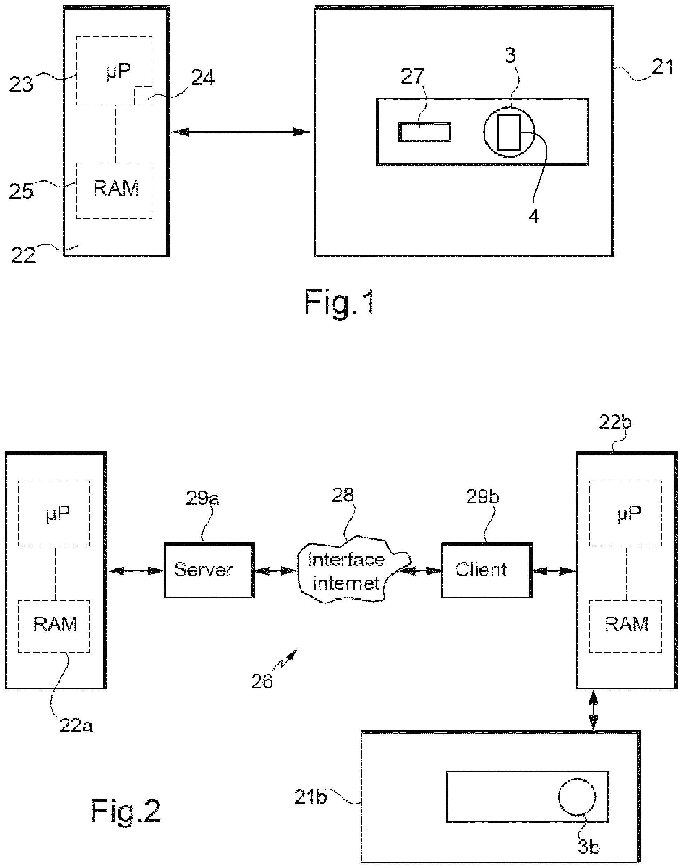

Figure 1 illustrates a manufacturing system configured to carry out machining steps of an ophthalmic surface corresponding for instance to a predetermined optical function of an ophthalmic device made from a substrate 3 which is temporarily and fixedly maintained by a blocking device 4 during the machining.

The system may comprises a manufacturing machine 21 and system parts generally formed by at least one command and control unit 22 configured to communicate with a data processing system (or control unit) of the machine 21 and configured to run a computer program having instructions configured to implement at least the machining step of the method, when said computer program is run by a computer.

The machine 21 is here a numerical-control "free-form" turning machine 1, numerical control denoting the set of equipment and software, the function of which is to give movement instructions to all the elements of the machine 1.

The machine 1 comprises a machining tool 27, for instance a moveable machining arm on which is mounted a cutting tool provided with a cutting edged, and a data processing system or a control unit (not shown) configured for controlling the tool 27.

The command and control unit 22 comprises a microprocessor 23 having a memory 24, in particular a non-volatile memory, allowing it to load and store the computer program, also called software, which when it is executed in the microprocessor 23, allows the implementation of method according to the disclosure.

This non-volatile memory 24 is for example of the ROM ("read only memory") type.

The command and control unit 22 further comprises a memory 25, in particular a volatile memory, allowing data to be stored during the execution of the software and the implementation of the method.

This volatile memory 25 is for example of the RAM or EEPROM type (respectively "random access memory" and "electrically erasable programmable read only memory").

The command and control unit may be only at least partially integrated into the machine. In other words, the control unit may be arranged in part, or in whole, outside the machine.

The command and control unit can form at least partially a part of the machine and may comprise one or a plurality of command and control modules located inside and/or outside the machine.

The machine 21 is here configured for roughing and next finishing the face(s) in order to form the ophthalmic lens.

Therefore, the machining tool 27 is a roughing tool if roughing or a finishing tool if finishing.

The machine 21 can also be configured for polishing the faces and/or for edging the peripheral edge in order to form the ophthalmic lens. The tool is also adapted to the polishing and/or edging.

The command and control unit 22 is configured to command and control at least some of the steps of the manufacturing method described below.

Figure 2 shows a client-server communication interface 26 comprising for instance a so-called supplier side 29a and another, so-called client side 29b, and these two sides communicating via an internet interface 28.

The supplier side comprises a server 29a linked to a data processing system or a command and control unit 22a of the same type as that in Figure 1, this server 29a being configured to communicate with the internet interface 28.

The client side 29b is configured to communicate with the internet interface 28, and is linked to a data processing system or a command and control unit 22b of the same type as that of the supplier side.

Further, the command and control unit 22b on the client-side is linked to a manufacturing machine 21b of the same type as that in Figure 1 for manufacturing at least the first face 3b of an ophthalmic substrate.

For instance, the command and control unit 22b on the client-side is configured for receiving by a user some parameters about the ophthalmic device to be machined and about the manufacturing method intended to be implemented for machining the ophthalmic device.

For instance, the parameters about the ophthalmic device may include geometrical characteristics and/or optical function of an ophthalmic surface intended to be manufactured and/or at least one information representative of intrinsic parameter of a material of the ophthalmic device.

For instance, the parameters about the manufacturing method includes information representative of machining steps and/or of the blocking device 4, such as a blocking force applied for instance by a clamping device or a vacuum device or only the type of clamping device and/or vacuum device.

The command and control unit 22b on the client-side, using the internet 28 and server 29a interface, sends the data received to the command and control unit 22a on the supplier-side for the determination of the manufacturing file and operational parameters.

The command and control unit 22a on the supplier-side executes the computer program that it contains in order to implement for instance the sequence of the forces applied by the blocking device depending on the machining steps and optionally edging step and/or polishing step.

Using the server 29a and the internet interface 28, the command and control unit 22a on the supplier-side sends the manufacturing file and operational parameters.

The command and control unit 22b on the client side is here configured to execute software for implementing the other steps of the method for manufacturing by machining the ophthalmic device using the manufacturing file and operational parameters thanks to the manufacturing system 21b.

In variant, a step of determining the forces can be carried out by the command and control unit 22b on the client side.

In another variant, the manufacturing system can be located on the supplier side so that the command and control unit 22a on the supplier side is further configured to machine the ophthalmic surface.

In another variant, the manufacturing system can only comprise a blocking device on which the blocking force is manually set depending on the machining steps and optionally edging step and/or polishing step.

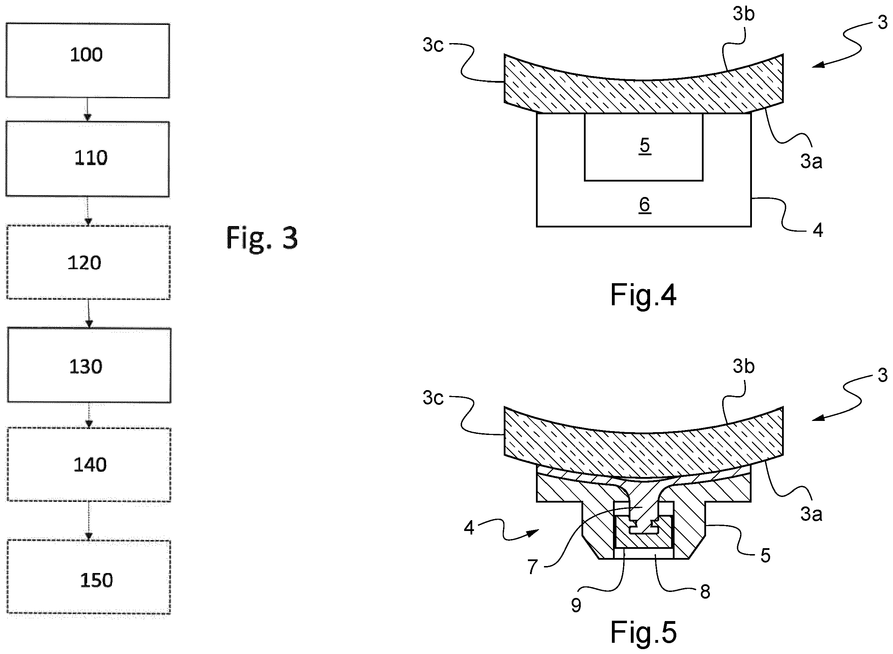

Figure 3 shows the steps of the method for manufacturing carried out by the manufacturing system 21, 21b and/or client-server communication interface 26 described above, which comprises the step 100 of providing a substrate on which is fixedly and temporarily mounted a block member.

The substrate can be a blank or a semi-finished ophthalmic lens.

The method comprises a step 110 of blocking the substrate by applying on the latter a first blocking force and of first roughing a face of the substrate.

The method optionally comprises a step 120 of blocking the substrate by applying on the latter a third blocking force and of second roughing the face of the substrate.

The first roughing may comprise cribbing and/or milling while the second roughing may comprise turning of the substrate.

Therefore, the second roughing here generates cutting forces lower than the cutting forces generated during the first roughing and thus requires less strongly holding the substrate than during the first roughing.

The first blocking force is thus higher than the third blocking force.

Next, the method comprises a step 130 of blocking the substrate by applying on the latter a second blocking force and of finishing the face of the substrate.

Finishing may comprise diamond turning of the substrate.

First mechanical stresses are applied to the substrate during roughing and second mechanical stresses are applied to the substrate during finishing.

The second mechanical stresses are lower than the first mechanical stresses.

The first blocking force applied during the first roughing is thus higher than the second blocking force applied during the finishing.

In addition, the second roughing here generates cutting forces higher than the cutting forces generated during the finishing and thus requires more strongly holding the substrate than during the finishing.

The third blocking force may thus be equal or lower than the first blocking force.

The method optionally comprises a step 140 of blocking the substrate by applying on the latter a fourth blocking force and of edging the substrate after steps 110-130.

The method optionally comprises a step 150 of blocking the substrate by applying on the latter a fifth blocking force and of polishing the substrate after steps 110-130.

The fourth blocking force and/or the fifth blocking force may be equal, lower or higher than the first blocking force and/or the second blocking force and/or the third blocking force if any.

The face of the substrate which is machined can define an ophthalmic surface which is a progressive ophthalmic surface.

In variant, that can be a toric surface or others corrective surfaces.

Blocking the substrate may comprise maintaining the substrate by clamping the substrate and/or by vacuum sucking the substrate depending on the blocking device.

Figure 4 shows in more detail the blocking device 4 according to an embodiment and its cooperation with the substrate 3.

In particular, the blocking device 4 here comprises a block member 5, also called blocker, which can be made for instance of metal or of plastic. An intermediary part (not shown) can be formed by a protective film and/or an adhesive film and sandwiched between the block member 5 and substrate 3.

In variant, the block member main part can be made by a permanent part made of metal and a non-permanent part made of fuse metal.

The block member 5 is configured to be temporarily and fixedly connected to the ophthalmic device at least during the machining steps described above.

The block member 5 is here configured to be connected to a second face 3a of the substrate 3, which is opposite to the first face 3b thereof.

In the present embodiment, the first face 3b is also called a rear face while the second face 3a is also called a front face.

The rear face can be located in regard of an eye of a wearer when the ophthalmic device is worn, while the front face can be located in regard of an object when the ophthalmic device is worn, or inversely.

In variants, the block member 5 can be configured to be connected to an outline portion 3c, or edge, which joins both first face 3b and second face 3a, or both the second face 3a and the outline portion 3c, or the second face 3a, or both the second face 3a and the outline portion 3c.

In another variant, the block member 5 can be configured to be connected successively to the first face 3b and the second face 3a, in combination or not with the outline portion 3c.

The blocking device may further comprise a clamping member 6 which is configured to apply a variable clamping force selected amongst at least the first blocking force and the second blocking force, optionally the third, fourth and fifth blocking forces if the respective steps are carried out.

The clamping member 6 is mounted in the manufacturing machine 21 and is configured to cooperate with the block member 5 so that to apply the respective blocking forces on a face of the substrate 3, which is not machined by roughing and/or finishing and/or on an outline portion.

Roughing and finishing, and optionally edging and/or polishing, are here carried out on the first face 3b and the respective blocking forces are applied on the second face 3a.

Figure 5 shows in more detail the blocking device 4 according to another embodiment and its cooperation with the substrate 3.

In particular, the blocking device 4 here comprises the block member 5, also called blocker, which differs from the above in which it comprises an opening forming a chamber 8 in which is inserted a piston 9 mechanically connected to suction cup 7 having a main part sandwiched between the block member 5 and the second face 3a and a connecting part extending in the chamber 8 and cooperating with the piston 9.

The suction cup 7, the piston 9 and the chamber 8 define a vacuum sucking member which is configured to apply a variable vacuum sucking force selected amongst at least the first blocking force and the second blocking force, optionally the third, fourth and fifth blocking forces if the respective steps are carried out.

The vacuum sucking member is in fluidic communication with a vacuum device (not shown) located in or outside of the machine and which is controlled for variably sucking the piston 9.

Vacuum sucking is carried out by applying forces on a face of the substrate which is not machined by roughing and/or finishing. In particular, roughing and finishing, and optionally edging and/or polishing, are here carried out on the first face 3b and the respective blocking forces are applied on the second face 3a.

According to the disclosure, the blocking of the substrate can be adapted depending of the specific machining, that is to say between the roughing in which first mechanical stresses are applied to the substrate and the finishing in which second mechanical stresses are applied to the substrate, the second mechanical stresses being lower than the first mechanical stresses.

In other words, during roughing, at least the first blocking force allows strongly holding the substrate and resist to high cutting forces, while during finishing, the second blocking force allows less strongly holding the substrate because of lower cutting forces.

According to the disclosure, the method allows the substrate to be partially deformed due to the first blocking force applied thereon during roughing, while the method does not allow, or at least mainly prevents, the substrate to be deformed due to the second blocking force applied thereon.

By both allowing the partial deformation of the substrate during roughing and preventing and/or reducing and/or cancelling the partial deformation of the substrate during finishing, the method according to the disclosure limits the effects of the deformation phenomena generated during the machining of the ophthalmic device, and thus reduces an optical power error, for instance a power deviation, generated by such deformation phenomena, thus providing a more accurate ophthalmic device.

It should be noted more generally that the disclosure is not limited to the examples described and represented.

## Claims

1. A method for manufacturing by machining an ophthalmic device made from a substrate (3), carrying out a roughing (110, 120) on a face (3a, 3b) of the substrate and next a finishing (130) on said face of the substrate, the method comprising blocking (110-150) the substrate by applying on the latter a first blocking force during the roughing and a second blocking force during the finishing, the first blocking force being higher than the second blocking force.

2. Method according to claim 1, wherein roughing (110, 120) comprises cribbing and/or milling and/or turning of the substrate, and/or finishing comprises diamond turning of the substrate.

3. Method according to one of claims 1 and 2, comprising a first roughing (110) during which the first blocking force is applied on the substrate (3) and a second roughing (120) between the first roughing and the finishing (130) and during which a third blocking force is applied on the substrate, the third blocking force being higher than the second blocking force applied during the finishing.

4. Method according to claim 3, wherein the third blocking force is equal or lower than the first blocking force.

5. Method according to any one of claims 1 to 4, comprising next edging (140) and/or polishing (150) the substrate and blocking the substrate by applying on the latter a fourth blocking force and/or a fifth blocking force during the edging, respectively the polishing, the fourth blocking force and/or the fifth blocking force being equal, lower or higher than the first blocking force and/or the second blocking force.

6. Method according to any one of claims 1 to 5, wherein roughing (110, 120) and finishing (130) are carried out on a first face of the substrate and at least the first blocking force and the second blocking force are applied on a second face (3a) of the substrate (3) opposite to the first face (3b) and/or on an outline portion (3c) of the substrate.

7. Method according to any one of claims 1 to 6, wherein blocking comprises maintaining the substrate (3) by clamping the substrate and/or by vacuum sucking the substrate.

8. Method according to any one of claims 1 to 7, wherein the substrate (3) is a blank or a semi-finished ophthalmic lens; and/or the substrate which is machined defines an ophthalmic surface which is a progressive ophthalmic surface, or a toric surface or another corrective surface.

9. A command and control unit including system elements configured to run a computer program in order to implement the method for manufacturing by machining an ophthalmic device according to any one of claims 1 to 8.

10. A manufacturing system configured for carrying out the manufacturing method according to claim 1 to 8, comprising a roughing tool, a finishing tool, a blocking device (4) configured to apply to the substrate at least the first blocking force during the roughing (110, 120) and the second blocking force during the finishing (130).

11. Manufacturing system according to claim 10, comprising the command and control unit according to claim 9.

12. Manufacturing system according one of claims 10 and 11, wherein the blocking device comprises a clamping member (6) which is configured to apply a variable clamping force selected amongst at least the first blocking force and the second blocking force.

13. Manufacturing system according one of claims 10 and 11, wherein the blocking device comprises a vacuum sucking member (7, 8, 9) which is configured to apply a variable vacuum sucking force selected amongst at least the first blocking force and the second blocking force.

14. A computer program including instructions configured to implement the method for manufacturing by machining an ophthalmic device according to any one of claims 1 to 8, when said computer program is run by a computer.

15. A client-server communication interface for transferring to a remote computer at least manufacturing data, such as the first blocking force and the second blocking force, which are determined by a computer program that implements at least partially the method for manufacturing by machining an ophthalmic device according to any one of claims 1 to 8, when said computer program is run in a command and control unit, the remote computer implementing the rest of said method for manufacturing.
